# EUROPEAN PATENT APPLICATION

(11) **EP 4 075 348 A1**
(43) Date of publication of application: **19.10.2022**
(21) Application number: 21168273.7
(22) Date of filing: 14.04.2021
(51) Int. Cl.: G06N 20/00

(54) **QUALITY CONTROL OF A MACHINE LEARNING MODEL**

(71) Applicant: Siemens Aktiengesellschaft, 80333 München (DE)
(72) Inventor: Singh, Saurabh Narayan, 81739 München (DE); Sauer, Markus, 81739 München (DE)

(57) **Abstract**

The disclosure describes a computer-implemented method and a quality control system for quality control of a machine learning model, which can be based on a federated learning method collectively performed by nodes of a decentralized distributed database. A modified machine learning model is generated by training the machine learning model using a first local dataset of a first node of the distributed database. The modified machine learning model is sent to the other nodes of the distributed database and checked against a respective local dataset of each of the other nodes. The other nodes perform a joint evaluation of the check results, e.g., through a consensus method. The machine learning model is replaced by the modified machine learning model if the evaluation result indicates an improvement. The invention enables federated learning without the need of a central authority managing the global model.

## Description

The present invention relates to a computer-implemented method and a quality control system for quality control of a machine learning model, wherein the machine learning model is collectively trained on nodes of a distributed database, e.g., a machine learning model based on federated learning. Furthermore, the invention relates to a node of a decentralized distributed database comprising such quality control system and a computer program product.

Many machine learning (ML) and artificial intelligence (AI) models rely on large data sets which are usually collected centrally. Alternatively, a machine learning model can be trained based on a combination of local learnings on distributed nodes and sharing of model updates among these nodes to reach an overall improved global machine learning model. The latter is typically called "federated learning". In this concept, usually a central authority/owner provides a global model for a largely distributed system. The individual nodes of this system can have local, specific characteristics and aspects, which can be considered when executing the global model locally. In addition, the local data of each individual node can be used to improve the global model. The local datasets are often collected by the central authority.

A prominent example of the federated learning method is the word and typing prediction system for entering texts in text fields on mobile devices. The word and typing predictions of the keyboards are improved locally based on the specific user's usage and context. In parallel, the local on-device learnings/the locally improved model are transferred back to a global learning model for improving the overall typing prediction behavior of all devices used in the ecosystem. In addition, also the individual local datasets can be transferred to a central authority managing the global model, e.g., for testing or verification purposes.

Such setups for AI/ML also become more and more relevant in the industrial context and industrial Internet of Things (IoT), e.g., for the predictive maintenance use cases or in automated processes. These industrial systems are typically highly distributed, and IoT devices (e.g. smart field devices with sensors) operate in specific contexts. In parallel, compute capabilities are increasing on all levels of the system, such that an application of AI mechanisms can be implemented on a cloud infrastructure, but also on an edge computing level down to smart field devices in the automation context.

However, the application of a federated learning approach to industrial scenarios may have other or even more requirements, e.g., regarding quality, replicability, traceability and privacy compared to the consumer world. In particular, a central owner, maintainer, and governance responsible of the global federated learning model may not be desirable if participating nodes belong to for example to different companies/Stakeholders. For example, a locally trained ML model and respective local data can be business critical, hence, the willingness to contribute to a global ML model without the right measures either technically or legally in place may be limited. Nevertheless, federated learning can provide a significant advantage for all participating parties, e.g., improved quality of the global ML model due to a larger data pool for training the model.

Therefore, it is an object of the present invention to provide a method to control contributions and/or the quality of a machine learning model, wherein the machine learning model is collectively trained on nodes of a distributed system.

The object is solved by the features of the independent claims. The dependent claims contain further developments of the invention.

The invention provides according to the first aspect a computer-implemented method for quality control of a machine learning model, the method comprising the steps:
- receiving the machine learning model, wherein the machine learning model is collectively trained on nodes of a distributed database,
- generating a modified machine learning model by training the machine learning model using a first local dataset of a first node of the decentralized distributed database,
- sending the modified machine learning model to other nodes of the decentralized distributed database if the modified machine learning model meets a predefined quality criterion of the first node,
- checking the modified machine learning model against a respective local dataset of each of the other nodes and outputting respective check results,
- performing a joint evaluation of the check results by the other nodes and outputting an evaluation result,
   and
- replacing the machine learning model by the modified machine learning model depending on the evaluation result.

The method is preferably performed by at least part of the nodes of the decentralized distributed database, e.g., a blockchain or distributed ledger, wherein at least one node provides the modified machine learning model and other nodes perform an evaluation of said modified machine learning model. Preferably, the model modification, i.e., local training based on a local dataset of a node, can be performed in parallel to an evaluation of another modification of the global model provided by another node.

The invention provides according to the second aspect a quality control system for quality control of a machine learning model, the quality control system comprising:
- a storage module configured to store the machine learning model, wherein the machine learning model is collectively trained on nodes of a decentralized distributed database, and a first local dataset,
- a model generator which is configured to generate a first modified machine learning model by training the machine learning model using the first local dataset,
- a sender which is configured to send the first modified machine learning model to other nodes of the decentralized distributed database if the first modified machine learning model meets a predefined quality criterion,
- a receiver which is configured to receive a second modified machine learning model, generated by another node of the decentralized distributed database,
- a checking module which is configured to check the second modified machine learning model against the local dataset and outputting a check result,
- an interface which is configured to perform a joint evaluation of the check result and other check results provided by other nodes together with the other nodes, and outputting an evaluation result,
   and
- a replacement module configured to replace the machine learning model by the second modified machine learning model depending on the evaluation result.

Preferably, the quality control system can be implemented on each node of the decentralized distributed database. Therefore, each node can be configured to improve the machine learning model and/or to check and to evaluate a modified machine learning model by another node of the decentralized distributed database.

Preferably, the interface for performing a joint evaluation is configured to perform a consensus method (consensus algorithm) by communicating with the other nodes of the decentralized distributed database. Preferably, the interface can be a blockchain module.

According to an embodiment of the quality control system, the generator can comprise an evaluation unit which is configured to verify if the quality criterion is met.

Furthermore, the invention provides a node of a decentralized distributed database comprising an aforementioned quality control system.

Unless indicated otherwise in the description below, the terms "perform", "calculate", "computer-aided", "compute", "replace", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties. Computers can therefore be for example personal computers, servers, programmable logic controllers (PLCs), handheld computer systems, Pocket PC devices, mobile radios and other communication devices that can process data in computer-aided fashion, processors and other electronic devices for data processing.

Within the context of embodiments of the invention, "computer-aided" or "computer-implemented" can be understood to mean for example an implementation of the method in which in particular a processor carries out at least one method step of the method. Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can, by way of example, also be an IC (integrated circuit), in particular an FPGA (field programmable gate array) or an ASIC (application-specific integrated circuit), or a DSP (digital signal processor) or a graphics processor GPU (graphics processing unit). A processor can also be understood to mean a virtualized processor, a virtual machine or a soft CPU. It can, by way of example, also be a programmable processor that is equipped with configuration steps for carrying out the method according to embodiments of the invention or that is configured by means of configuration steps such that the programmable processor realizes the features according to embodiments of the invention for the method, the component, the modules or other aspects and/or sub-aspects of embodiments of the invention.

Within the context of embodiments of the invention, a "module" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention. The applicable modules can comprise further elements. These elements are for example one or more interfaces (e.g. database interfaces, communication interfaces - e.g. network interface, WLAN interface) and/or a memory unit. The interfaces can be used for example to interchange (e.g. receive, convey, send or provide) data. The memory unit can be used for example to store, retrieve or provide data in computer-aided and/or automated fashion.

Within the context of embodiments of the invention, "comprise", in particular in regard to data and/or information, can be understood to mean for example (computer-aided) storage of applicable information or of an applicable datum in a data structure/data record (which e.g. is in turn stored in a memory unit).

Within the context of embodiments of the invention, "assign", in particular in regard to data and/or information, can be understood to mean for example computer-aided assignment of data and/or information. By way of example, a second datum is assigned to a first datum in this regard by means of a memory address or a unique identifier (UID), e.g. by storing the first datum together with the memory address or the unique identifier of the second datum together in a data record.

Within the context of embodiments of the invention, "provide", in particular in regard to data and/or information, can be understood to mean for example computer-aided provision. Provision is effected for example via an interface (e.g. a database interface, a network interface, an interface to a memory unit). This interface can be used for example to convey and/or send and/or retrieve and/or receive applicable data and/or information during the provision.

Within the context of embodiments of the invention, "smart contract process" can be understood to mean in particular an execution of a program code (e.g. of the control instructions) in a process by the distributed database system or the infrastructure thereof.

Within the context of embodiments of the invention, a "program code" (e.g. a smart contract) can be understood to mean for example a program instruction or multiple program instructions, in particular stored in one or more transactions. The program code is in particular executable and is executed by the distributed database system, for example. This can be realized by means of an execution environment (e.g. a virtual machine), for example, the execution environment or the program code preferably being Turing complete. The program code is preferably executed by the infrastructure of the distributed database system. This involves for example a virtual machine being realized by the infrastructure of the distributed database system.

Within the context of embodiments of the invention, a "smart contract" can be understood to mean for example an executable program code (see in particular the "program code" definition). The smart contract is preferably stored in a transaction of a distributed database system (e.g. a blockchain), for example in a data block of the distributed database system. By way of example, the smart contract can be executed in the same way as explained in the definition of "program code", in particular within the context of embodiments of the invention.

Within the context of embodiments of the invention, a "decentralized distributed database (system)", which, by way of example, can also be referred to as a distributed database, can be understood to mean for example a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database.

It is also possible, by way of example, that different consensus methods (consensus algorithms) are implemented. These can be for example a consensus method by means of a cryptographic puzzle, gossip about gossip, virtual voting or a combination of the methods (e.g. gossip about gossip in combination with virtual voting). If a blockchain is used, for example, then it can be implemented in particular by means of a Bitcoin-based implementation or an Ethereum-based implementation.

A distributed database system can also be a distributed communication system for data interchange or a peer-2-peer communication system or a peer-2-peer application, for example. This can be a network or a peer-2-peer network, for example. A/the distributed database system can also be a local distributed database system and/or a local distributed communication system, for example.

Within the context of embodiments of the invention, a "blockchain node", "node", "node of a distributed database system" and the like can be understood to mean for example devices (e.g. field devices or IoT devices), computers, smartphones, clients or subscribers that perform operations for (with) the distributed database system (e.g. a blockchain). Such nodes can, by way of example, execute transactions of a distributed database system or the data blocks thereof or insert or concatenate new data blocks with new transactions into the distributed database system by means of new data blocks.

Within the context of embodiments of the invention, a "machine learning model" can also be understood to mean an artificial intelligence (AI) (model). For example, a machine learning (ML) model can be an artificial neural network. A machine learning model is typically trained/configured using a given dataset - usually referred to as "training data" based on a machine learning method.

A "modified machine learning model" can be understood to mean a machine learning model which has been trained on a different dataset, i.e., it has been updated and/or reconfigured. For example, (parameters of) a machine learning model can be refined or improved using a larger or different training dataset. Hence, "modifying a machine learning model" can be understood to mean training of a given machine learning model using a different dataset, e.g., adjusting weights of an artificial neural network based on the different dataset.

The machine learning model is collectively trained on nodes of a distributed database. Within the context of this invention, this can be understood to mean a federated learning approach/method, wherein a global machine learning model is locally trained on the respective nodes of the distributed database and subsequently shared with the other nodes.

Within the context of embodiments of the invention, a "quality criterion" of a modified machine learning model can be understood to mean for example a predefined performance value, e.g., with respect to computing speed, and/or model accuracy. A quality criterion can for example be determined by evaluating the machine learning model using a given dataset. For example, an improvement of a modified machine learning model over the original machine learning model can be determined by comparing the respective model outputs when a given dataset is applied to the models (i.e., when the models are run on a given dataset).

Within the context of embodiments of the invention, a "replacing a machine learning model by the modified machine learning model" can in particular be understood to mean storing the modified machine learning model on each node of the distributed database, wherein the preceding/former/original machine learning model can be overwritten, updated, deleted and/or moved to a backup storage.

The proposed invention enables a quality control of federated learning without a central authority managing the local datasets and the model training/development. Using a distributed database, e.g., blockchain, the performance of the machine learning model and/or the contribution of a node to the machine learning model can be monitored and controlled. The method can for example be implemented using smart contracts, such that the federated model training can be more transparent.

It is one advantage of the proposed invention that the collective training and improvement of the machine learning model, also referred to as federated machine learning model or global machine learning model, can be performed without the need to reveal and/or exchange local data of the individual nodes. Hence, a node can locally validate and/or modify/train a machine learning model, while the locally used training data do not need to be disclosed to the other nodes. Hence, this increases the level of data privacy for federated learning.

The invention further provides a distributed ownership of the global machine learning model which guarantees a certain quality and a continuous improvement of the model itself, by shared filtering of the nodes' individual contribution.

Therefore, the proposed invention provides a governance mechanism and control system to control contributions and/or measure the quality of the ML algorithm and/or the data set and/or the contributed improvements to the joint model. This is achieved by introducing a technical governance and audit trail process and mechanisms to measure and tune the level of integration of each model contribution based upon performance of the respective contributing system/node. This can be achieved by using a distributed database and distributed computing technologies like Smart Contracts and Blockchain.

According to a preferred embodiment of the method, the machine learning model can be based on a federated learning method collectively performed by nodes of the distributed database.

According to a preferred embodiment of the method, verifying if the quality criterion is met can comprise checking the modified machine learning model against the first local dataset.

A quality criterion can for example be understood as an improvement or a level of improvement of the modified machine learning model compared to the original machine learning model. Such level of improvement can for example be verified by checking the modified learning model against the first local dataset and comparing the output with the respective output of the original machine learning model. If for example the comparison results in a better fit to the first local dataset, the modified machine learning model meets the quality criterion.

According to a further embodiment of the method, the verification can be executed by a smart contract.

Verification details can be implemented and defined by a smart contract such that each node performs the same verification steps and/or applies the same criteria.

According to a preferred embodiment of the method, the joint evaluation can be based on a consensus method performed by the other nodes.

Therefore, it is ensured that only model modifications are applied which are positively evaluated by all or a majority of the participating nodes. Different consensus methods can be applied. For example, a majority vote can be implemented.

According to a preferred embodiment of the method, the machine learning model can be replaced by the modified machine learning model if the evaluation result indicates an improvement of the modified machine learning model over the machine learning model.

Preferably, the modified machine learning model is accepted if it provides an improvement over the previous joint/global machine learning model. This may be for example an improvement with respect to computing time/speed and/or model complexity and/or model accuracy.

According to a further embodiment of the method, the evaluation result can indicate an improvement if a majority of check results indicate an improvement.

According to a further embodiment of the method, the modified machine learning model can be validated based on a predefined test value before checking against a local dataset of a node.

A test value can for example be a checksum, e.g., a hash value. For example, this allows to validate the integrity of the modified machine learning model before applying the model to a given dataset.

According to a further embodiment of the method a model change value can be determined by comparing the modified machine learning model with the machine learning model, and only the model change value is sent to the other nodes for checking the modified machine learning model against the respective local datasets.

As the (original) machine learning model is preferably stored by all nodes, a model change value, e.g., a difference (value) or a hash value of the model modification/change, can be sent to the other nodes, such that the nodes can restore the modified machine learning model thereof. This can save storage and/or can reduce the throughput rate of the network.

According to a further embodiment of the method the first node can receive a reward if the evaluation result indicates an improvement of the modified machine learning model over the machine learning model.

Based on the governance mechanism, data sets/contributions with better performance and higher impact on the algorithm/model can for example be awarded incentives, e.g. a monetary reward, whereas datasets with no significant improvement can be marked as such and allowed to test the model later.

In addition, a computer program product (non-transitory computer readable storage medium having instructions, which when executed by a processor, perform actions) comprising program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
Fig. 1: shows a first exemplary embodiment of the invention;
Fig. 2: shows a second exemplary embodiment of the invention; and
Fig. 3: shows a third exemplary embodiment of the invention.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

In particular, in view of the high number of different realization options, it is impossible and also not helpful or necessary for the understanding of embodiments of the invention to name all these realization options. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

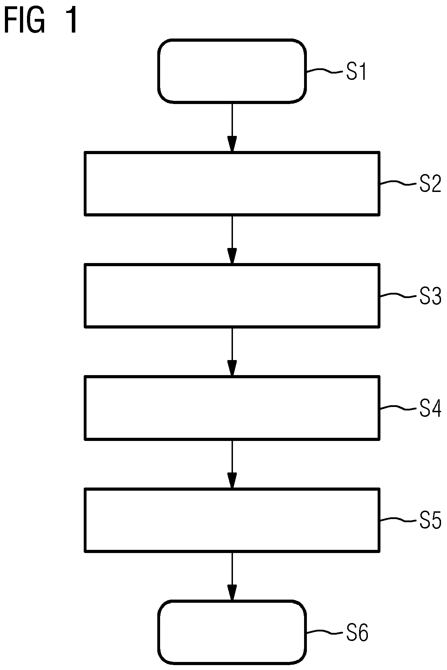

Figure 1 shows a flow chart illustrating method steps according to an exemplary embodiment of the computer-implemented method according to the invention.

The computer-implemented method enables federated learning of a machine learning model without the need of a central authority managing the machine learning model. The method is performed on nodes of a decentralized distributed database, e.g. a blockchain. Preferably, each node is configured to insert data into the database, e.g., propose transactions and/or insert data blocks in a blockchain. Furthermore, each node is preferably configured to contribute to the machine learning model and/or to validate the machine learning model.

The machine learning model, also referred to as global machine learning model or global model, is stored on all nodes which participate in the federated learning process. The machine learning model is collectively trained on all participating nodes. Hence, such a participating node comprises a machine learning module/model generator configured to train a machine learning model using a locally stored dataset. The nodes therefore can apply their local learnings to the global model to run their specific machine learning models applications. Datasets of the execution of the global model or a local machine learning model can be continuously stored in the local storage of each node and further be used for training the machine learning model.

In the first step S1 the global machine learning model is received or read in by a first node, e.g., it is received from a first node's storage module.

In the next step S2 the first node modifies the global machine learning model, i.e., the global machine learning model is trained by the first node using a locally stored dataset of said first node generating a modified machine learning model. In other words, the global machine learning model evolves into a new, local model after training the machine learning model using the local dataset of the first node.

The global machine learning model can for example be an artificial neural network (NN). Training the NN using a local dataset results in a modified machine learning model/NN having adjusted weights.

The modified machine learning model can therefore be understood as the global machine learning model comprising modifications/modified parameters which are modified based on the local dataset of the first node. In other words, the modified machine learning model is based on the global machine learning model. The modified machine learning model can also be referred to as the local machine learning model.

In the next step S3 the first node sends the modified/local machine learning model to other nodes of the decentralized distributed database. Preferably, these other nodes are configured to participate in the federated learning method.

The modified/local machine learning model is preferably only sent to these other nodes if it meets a predefined quality criterion which is set by the first node. The quality criterion can for example define a level of improvement of the modified machine learning model compared to the global machine learning model. The first node can therefore preferably perform first (i.e., before sending) a verification if this quality criterion is met. This verification can for example comprise checking the modified machine learning model against the local dataset of the first node. The output of the modified machine learning model can then be compared to the output of the global machine learning model for determining an improvement. If the model modification meets the given quality criterion, the modified machine learning model can be broadcasted to the other nodes. If the quality criterion is not met, the modified machine learning model is preferably not shared with the other nodes. This enables a first quality control of the modification of the machine learning model locally performed on the first node.

Preferably the verification of the model modification is implemented by a smart contract. Therefore, the verification criteria and also quality criterion can be defined and used as such by all participating nodes.

In the next step S4 the modified machine learning model is received by the other nodes and checked against respective local datasets of each of the nodes outputting respective check results.

The modified machine learning model can be first validated based on a predefined test value, e.g., a hash value before further processing. For example, the integrity or correctness of the modified machine learning model can hence be checked.

It is also possible that only a model change value is sent to the other nodes, wherein the model change value depends on the modification of the modified machine learning model compared to the global machine learning model. Since the global machine learning model is also stored on all other nodes, each node can deduce the modified machine learning model from the model change value.

The modified machine learning model is then run against the respective local dataset in order to check whether it yields an improvement with respect to the global machine learning model. Therefore, also the global machine learning model is run against the respective local dataset.

For example, the modified NN is checked against a local dataset, wherein the local dataset is used as input data for the modified NN. The output, e.g., a prediction value, is then compared with the output of the global NN. The comparison result is outputted as an individual check result by the respective node.

In the next step S5, the check results from the other nodes are collectively evaluated by the other nodes, i.e., all nodes except the first node. The joint evaluation is preferably based on a consensus method which can be implemented on the distributed database. For example, the evaluation can be based on a majority vote. It is for example evaluated if the check results predominantly indicate a model improvement, e.g. the majority of check results indicate a better prediction value than the prediction of the original global ML model.

In the next step S6, the global machine learning model can be replaced by the modified machine learning model depending on the evaluation result. Preferably, the machine learning model is replaced if the evaluation result indicates an improvement of the modified machine learning model over the machine learning model. For example, the evaluation result indicates an improvement if a majority of check results indicate an improvement.

The modified machine learning model therefore becomes the new global machine learning model. Preferably, all nodes update their copy of the global machine learning model, i.e., their local models, accordingly.

The first node can for example receive a reward if the evaluation indicates an improvement of the modified machine learning model over the machine learning model.

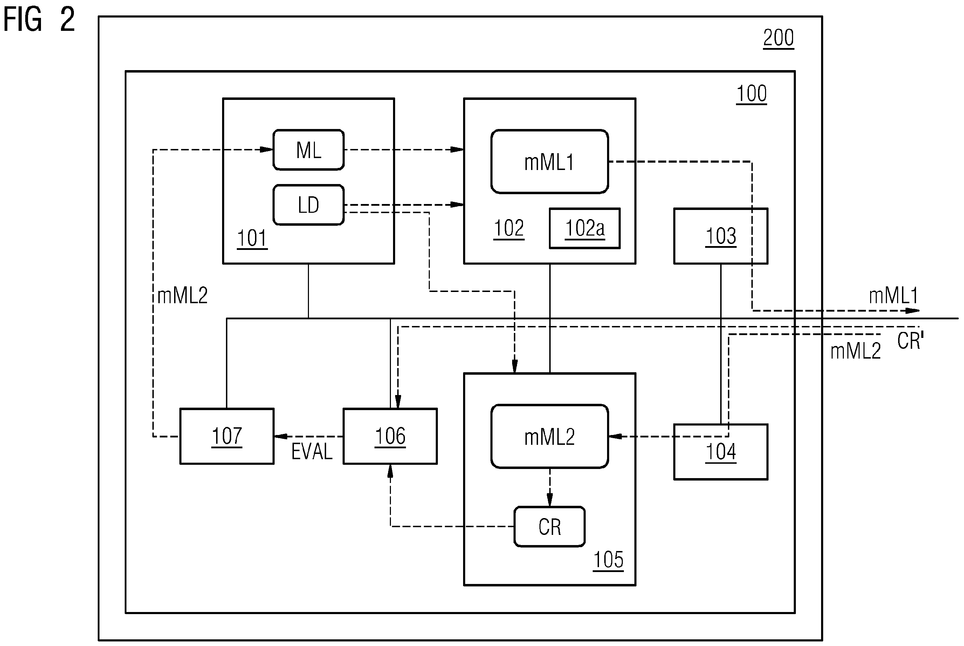

Figure 2 shows a block diagram of an exemplary embodiment of a quality control system 100 for quality control of a machine learning model implemented on a node 200 of a decentralized distributed database. The node 200 can for example be a mobile device or an IoT device.

The quality control system 100 comprises a storage module 101, a model generator 102, a sender 103, a receiver 104, a checking module 105, an interface 106, and a replacement module 107. The quality control system 100 is preferably configured to perform the method steps as exemplary described in Figure 1.

The storage module 101 is configured to store a global machine learning model ML which can be understood as the current/present version of the global model. The global machine learning model ML is collectively trained using the respective model generators 102 on the nodes of a decentralized distributed database. The storage module 101 is further configured to store a first local dataset LD. Furthermore, the storage module 101 can store previous versions of the global machine learning model ML and/or further local machine learning models of the node 200.

The model generator 102 is configured to generate a first modified machine learning model mML1 based on the global machine learning model ML and using the first local dataset LD. The global machine learning model ML is trained using the local dataset LD resulting in the first modified machine learning model mML1.

The model generator 102 is further configured to perform a first quality check of the modified machine learning model mML1. Therefore, the model generator 102 can further comprise an evaluation unit 102a which is configured to determine the contribution of the modified machine learning model and to check it against a predefined quality criterion, e.g. a condition to meet a given improvement or performance value. The first modified machine learning model mML1 is run against the local dataset LD. Based on the result, the evaluation unit can for example detect an improvement to the global machine learning model ML.

If the first modified machine learning model mML1 meets the quality criterion, it is sent by the sender 103 to other nodes of the decentralized distributed database.

The receiver 104 is configured to receive a second modified machine learning model mML2, which has been generated (based on the global machine learning model ML) by another node of the decentralized distributed database.

The checking module 105 configured to check the second modified machine learning model mML2 against the local dataset LD and to output a check result CR. Preferably, the checking module 105 can compare the output of the second modified machine learning model mML2 with a respective output of the stored global machine learning model ML and/or the first modified machine learning model mML1, and can return the check result CR based on said comparison.

The interface 106 is configured to communicate with the other nodes to perform a consensus method for jointly evaluating the check results. Therefore, the interface can be configured to receive check results CR' provided by other nodes, which are assigned to the second modified machine learning model mML2. The evaluation result EVAL of the joint evaluation of the check results CR', CR is transmitted to the replacement module 107. For example, the evaluation result EVAL indicates an improvement of the modified machine learning model if a majority of check results CR' indicate an improvement.

The replacement module 107 is configured to replace the global machine learning model by the second modified machine learning model depending on the evaluation result EVAL. Preferably, the global machine learning model is only updated if the evaluation result EVAL indicates an improvement, e.g. with respect to performance and/or model accuracy.

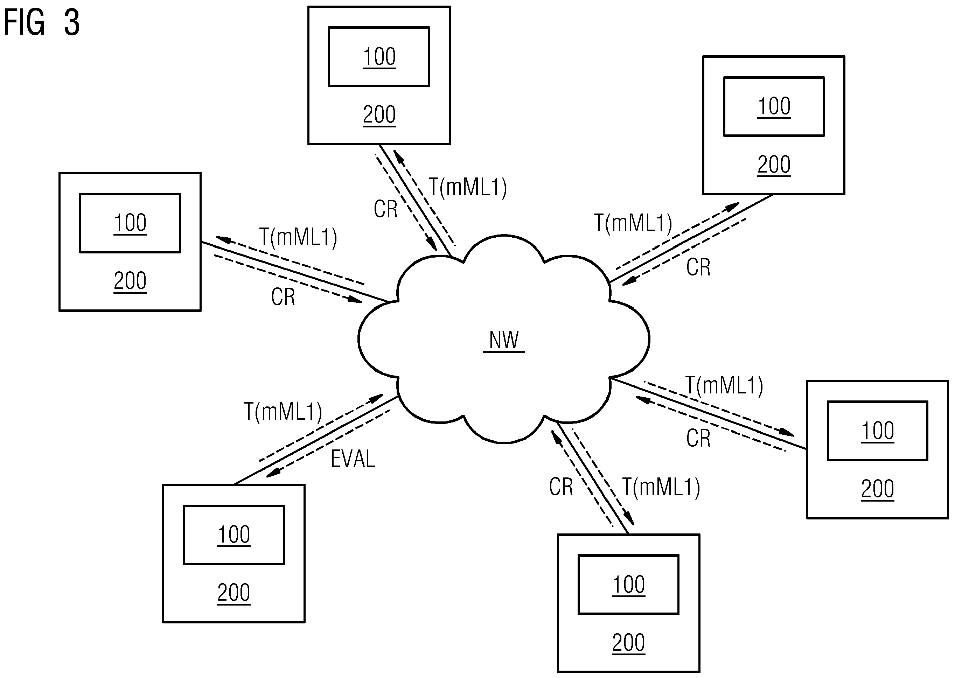

Figure 3 shows a block diagram of another exemplary embodiment of the invention. It shows a network NW of nodes 200 realizing a decentralized distributed database, e.g. a blockchain network. Smart contracts stored across the nodes can implement this governance mechanism. The nodes are configured to contribute to a federated learning method for training a global machine learning model. Therefore, each node 200 comprises a quality control system 100, as exemplarily shown in Figure 2. Hence, each node at least comprises a machine learning module or model generator 102, and a storage for datasets 101, wherein the datasets can comprise measurement data (input, output), output predictions and prediction errors. Furthermore, the nodes comprise quality check modules 102a, 105.

Each of the nodes 200 can apply their local machine learning model and/or the global machine learning model to data of machine learning applications. Datasets from execution of the machine learning algorithms are continuously stored in the local storage of each node 200. Preferably all datasets of all nodes 200 can be used to train and to improve the global machine learning model.

A first node 200 can train the global machine learning model against its local dataset resulting in a modified machine learning model mML1. This evolved machine learning model mML1 is part of the local machine learning model of said node. The evolution unit of the model generator checks whether the modified machine learning model meets a predefined quality criterion. It checks for example if the modified machine learning model mML1 represents an improvement over the global machine learning model. The evaluation unit runs the modified machine learning model mML1 against the local dataset and returns an output of the model. Based on the output, it can detect if the modified machine learning model contributes an improvement, e.g., model improvement, to the globally shared machine learning model.

Based on this result, the node can propose a new transaction T(mML1) to the network NW with its contribution, i.e., the modified machine learning model mML1 and/or only a model change value describing the modification of the modified machine learning model with respect to the global machine learning model, to the other nodes 200 in the network NW.

The modified machine learning model, which is based on the execution of all subsequent transactions, could be either stored in the transaction itself, or just as an anchor (e.g. hash value of model change) is stored in the transaction of the distributed database. In the latter case the modified machine learning model can then also be managed by a separate global model managing component, which handles the storage and provisioning of the model across the distributed system.

The other nodes receive the transaction proposal T(mML1) comprising the modified machine learning model mML1 and/or only the model change value. The other nodes check the quality of the proposed modified machine learning model mML1 by running it against their respective local datasets. Preferably, these performance/quality checks are performed depending on local quality criteria defined by each node individually. Furthermore, for comparison, the current global machine learning model is also run against the respective local datasets. Based on these test runs a check result CR is provided by each node.

Each node broadcasts its check result CR via an interface, e.g., a blockchain module, to the network NW. Based on the check results provided by all contributing nodes, the nodes of the blockchain network try to achieve a distributed consensus, e.g., based on voting, whether the transaction T(mML1) with the modified machine learning model mML1 should be accepted as new general improvement of the global machine learning model. Consensus can be realized in multiple ways.

If the transaction is accepted, the transaction is added to the Blockchain and the modified machine learning model mML1 replaces the former global machine learning model. Therefore, the machine learning model mML1 is distributed across the learning network NW and all nodes update their local models.

Preferably, this global learning and model improvement process is managed by smart contracts, such that even the process improving the model itself is tamperproof through mechanisms of the distributed, decentralized system.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for quality control of a machine learning model, the method comprising the steps:
- receiving (S1) the machine learning model, wherein the machine learning model is collectively trained on nodes of a distributed database,
- generating (S2) a modified machine learning model (mML1) by training the machine learning model using a first local dataset of a first node of the decentralized distributed database,
- sending (S3) the modified machine learning model (mML1) to other nodes of the decentralized distributed database if the modified machine learning model (mML1) meets a predefined quality criterion of the first node,
- checking (S4) the modified machine learning model (mML1) against a respective local dataset of each of the other nodes and outputting respective check results,
- performing (S5) a joint evaluation of the check results by the other nodes and outputting an evaluation result,
and
- replacing (S6) the machine learning model by the modified machine learning model (mML1) depending on the evaluation result.

2. Computer-implemented method according to claim 1, wherein the machine learning model (mML1) is based on a federated learning method collectively performed by nodes of the decentralized distributed database.

3. Computer-implemented method according to one of the preceding claims, wherein verifying if the quality criterion is met comprises checking the modified machine learning model against the first local dataset.

4. Computer-implemented method according to claim 3, wherein the verification is executed by a smart contract.

5. Computer-implemented method according to one of the preceding claims, wherein the joint evaluation is based on a consensus method performed by the other nodes.

6. Computer-implemented method according to one of the preceding claims, wherein the machine learning model (ML) is replaced by the modified machine learning model (mML1) if the evaluation result indicates an improvement of the modified machine learning model over the machine learning model.

7. Computer-implemented method according to claim 6, wherein the evaluation result indicates an improvement if a majority of check results indicate an improvement.

8. Computer-implemented method according to one of the preceding claims, wherein the modified machine learning model (mML1) is validated based on a predefined test value before checking against a local dataset of a node.

9. Computer-implemented method according to one of the preceding claims, wherein a model change value is determined by comparing the modified machine learning model with the machine learning model, and only the model change value is sent to the other nodes for checking the modified machine learning model against the respective local datasets.

10. Computer-implemented method according to one of the preceding claims, wherein the first node receives a reward if the evaluation result indicates an improvement of the modified machine learning model over the machine learning model.

11. Quality control system (100) for quality control of a machine learning model, the quality control system comprising:
- a storage (101) module configured to store the machine learning model, wherein the machine learning model is collectively trained on nodes of a decentralized distributed database, and a first local dataset,
- a model generator (102) which is configured to generate a first modified machine learning model by training the machine learning model using the first local dataset,
- a sender (103) which is configured to send the first modified machine learning model to other nodes of the decentralized distributed database if the first modified machine learning model meets a predefined quality criterion,
- a receiver (104) which is configured to receive a second modified machine learning model, generated by another node of the decentralized distributed database,
- a checking module (105) which is configured to check the second modified machine learning model against the local dataset and outputting a check result,
- an interface (106) which is configured to perform a joint evaluation of the check result and other check results provided by other nodes together with the other nodes, and outputting an evaluation result,
and
- a replacement module (107) configured to replace the machine learning model by the second modified machine learning model depending on the evaluation result.

12. Quality control system (100) according to claim 11, wherein the generator comprises an evaluation unit (102a) which is configured to verify if the quality criterion is met.

13. Node (200) of a decentralized distributed database comprising a quality control system according to claim 11 or 12.

14. Computer program product comprising instructions which, when the program is executed by a computer, cause the computer to carry out the steps of the method according to one of the claims 1 to 10.
